# EUROPEAN PATENT SPECIFICATION

(11) **EP 1 932 786 B1**
(45) Date of publication and mention of the grant of the patent: **13.10.2010**
(21) Application number: 07122580.9
(22) Date of filing: 07.12.2007
(51) Int. Cl.: B65G 49/08, B65G 65/00

(54) **An arm for operating roller planes of a storage unit for stocking ceramic products**
Arm zum Betreiben von Rollerplanen einer Lagereinheit zur Lagerung von Keramikprodukten
Bras pour la commande de plans de rouleaux d'une unité de stockage stockant des produits en céramique

(30) Priority: 11.12.2006 IT BO20060845
(43) Date of publication of application: 18.06.2008
(73) Proprietor: SIMA S.r.l., 41043 Formigine (MO) (IT)
(72) Inventor: Bardi, Maurizio, 41043 Formigine (MODENA) (IT)
(74) Representative: Dall'Olio, Giancarlo

(56) References cited:
- EP-A- 0 301 231
- EP-A- 1 314 664
- DE-A1- 3 320 737
- GB-A- 2 317 679
- IT-B- 1 190 308

## Description

This invention belongs to the sector of technology concerning stations for loading/unloading ceramic products to/from storage units.

More specifically it concerns an arm for operating the roller planes of a storage unit for ceramic products, in particular tiles.

Stations for loading/unloading ceramic tiles into/from storage units are known, essentially comprising a portal frame along the uprights of which two carriages are slidingly guided in a vertical direction, the first of which has a pair of projecting arms provided with means for turning the rollers of the various planes of the storage units, and the second of which has a operated roller plane which can receive/release ceramic tiles from/onto adjacent conveyors.

Each operating arm is provided with a plurality of horizontally aligned chucks, the interaxial distances between which are equal to the interaxial distances between adjacent rollers on each plane, the chucks being provided with pointed ends suitable for insertion into the relative hollow ends of the counter-positioned rollers in order to rotate the rollers in either direction, thus enabling the transfer of the tiles resting thereupon.

The operating arms, borne by the corresponding carriage, are vertically step-activated with a step that is equal to the interaxial distances between two consecutive roller planes, and horizontally activated towards/away from the roller planes to allow the pointed ends of the chucks to engage with/disengage from the ends of the rollers.

The chucks are advantageously provided, in a known way, with elastic organs which are suited to adjusting the compression force exerted on the ends of the rollers when engaging with the rollers, thus compensating the difference in length of the rollers.

The presence of these elastic organs subjects the supporting arms of the chucks, which project from and are connected to the relative carriage, to a flexing force which increases with the distance of the arms from the carriage, the maximum value of this force being found at the heads of the arms.

This flexing force, which acts upon the arms when the chucks engage with the rollers of the storage units, can result in failure of the pointed ends of the chucks to engage with the respective ends of the rollers, with all the drawbacks that this entails.

The same problems are found with stations for loading/unloading of storage units equipped with only one arm projecting from the carriage.

Similar problems also arise with storage units having the supporting sides of the rollers not perfectly perpendicular to the rollers, that is displaying an angle of deviation relative to the operating arm/arms.

During the movement of the arm/arms towards the rollers, the chucks fail to engage with those roller ends which are at a greater distance from the arm/arms.

To partially obviate these problems, storage unit loading/unloading stations have been designed which are provided with tensioning elements, such as chains, bars, etc., which are fixed to the heads of the arms to make the structure more rigid and prevent the arms from flexing.

This solution, however, is advantageous only with storage units, the sides of which supporting the rollers are substantially perpendicular to the rollers, For the reasons illustrated above, this solution is ineffective in all those cases where the supporting sides of the storage units are at a deviation angle relative to the arms, with the problem increasing as the angle increases.

A further drawback of this solution is that in this case, access of the storage unit to the zone of operations between the two arms is permitted only when the arms are raised higher than the maximum height of the storage units and thus do not interfere frontally with the connecting tensioning elements of the heads of the arms.

Document EP-A-0 301 231 discloses an arm according to the preamble of claim 1 and an apparatus for loading and unloading plate-like ceramic materials on an accumulation container having a plurality of superimposed planes of free rollers, comprising: a receiving assembly having drive rollers arranged on a horizontal plane and a vertically movable compensating container, provided with uprights supporting a plurality of superimposed ledges adapted to support said plate-like ceramic materials, said compensating container being fed by said plurality of drive rollers, a transport assembly having at least one vertical upright supporting a transport body vertically movable along said vertical upright; said transport body comprises on the same horizontal plane a first of part being formed by a horizontal plane of drive rollers and a second part being formed by said actuation means for successively movement of each plane of said plurality of planes.

The aim of this invention is to obviate the abovementioned drawbacks by providing an arm for operating the roller planes of a storage unit for stocking ceramic products which is particularly suited to stations for loading/unloading storage units of this type, and allows all the rollers of each plane to be correctly activated under any operational circumstances.

A further aim of this invention is to provide an arm which can operate the roller planes of storage units, the sides of which supporting the rollers are not perfectly perpendicular to the rollers.

A further aim of this invention is to provide an extremely functional and versatile operating arm which enables the storage unit to engage with/disengage from the station irrespective of the configuration of the arm.

The above-mentioned aims are achieved by the arm of claim 1 and the station of claim 9.

The characteristics of the invention will emerge from the following description, where several preferred but not exclusive embodiments are described, with reference to the appended figures of the drawings, in which:
- figure 1 is a side view of the operating arm of the invention operating in a partially illustrated storage unit loading/unloading station;
- figure 1A is an enlarged view of section A-A of figure 1;
- figure 2 is a plan view of the station in figure 1 operating with a type of storage unit known as standard;
- figure 3 is a plan view of the station in figure 1 operating with a further, non-perfect type of storage unit.

In the above figures, the general reference number 1 refers to the arm of the invention for operating the roller planes of a storage unit for stocking ceramic products, comprising a main longitudinal member 2 provided with a plurality of organs 4 for turning the ends of the rollers 31 of each plane of the storage unit 30; and a supporting longitudinal member 5, onto which the main longitudinal member 2 is hinged, which supporting longitudinal member 5 is activated vertically with stepped motion to position the operating organs 4 such as to face the ends of the rollers 31 of each plane of the storage unit 30, and is activated horizontally to move closer to/further from the sides 3 of the storage unit 30 to permit the operating organs 4 to engage with/disengage from the ends of the rollers 31 of each plane of the storage unit 30.

The main longitudinal member 2, which extends horizontally at least as far as the full extension of the sides 3 of the storage unit 30, can therefore oscillate with respect to the hinge axis y, as it moves closer to/further from the storage unit 30, thus allowing correct activation of the rollers 31 of the corresponding plane.

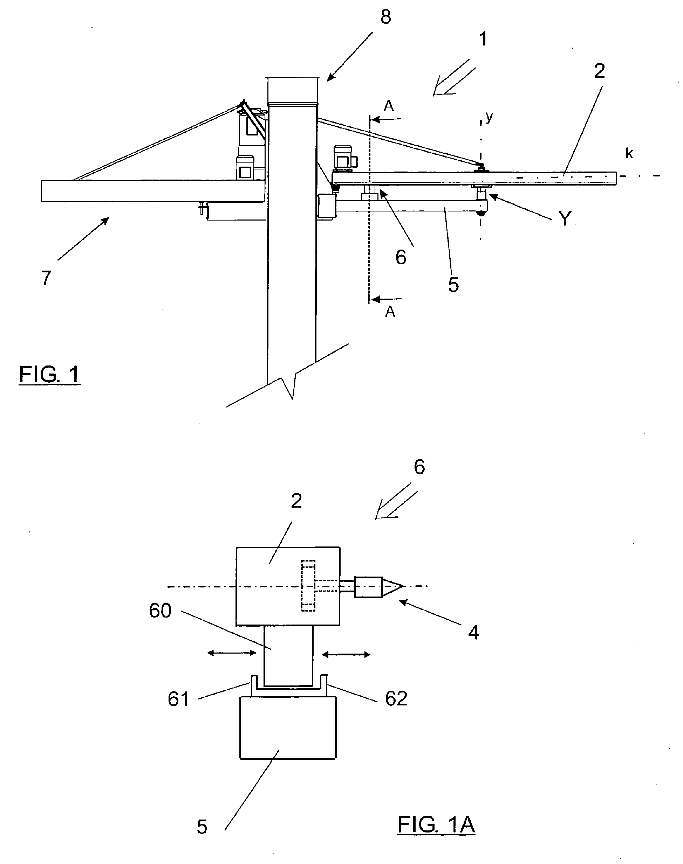

In a preferred embodiment, the support hinge Y of the main longitudinal member 2 to the supporting longitudinal member 5 is arranged at a point lying at about the halfway point of the sides 3 of the storage unit 30, that is, at the halfway point of the roller planes 31, and the supporting longitudinal member 5 is oriented parallel to the horizontal plane k containing the main longitudinal member 2 (figure 1).

Alternatively, the support hinge Y can be designed to slide lengthways on the supporting longitudinal member 5, for example using a slide.

The operating arm of the invention is advantageously provided with organs 6 for adjusting the oscillation of the main longitudinal member 2 relative to the supporting longitudinal member 5, in such a way as to define a permitted range of oscillation.

With reference to figure 1A, the adjusting organs 6 exhibit a vertical projection 60, provided below the main longitudinal member 2, which moves transversally during the oscillation phase to strike against abutment means provided by the underlying supporting longitudinal member 5.

As an example, the vertical projection 60 consists of a portion of tubular profile with a rectangular cross-section, the shorter base of which is constrained to the main longitudinal member 2, and the abutment means consist of a pair of wings, 61, 62, situated opposite each other and belonging to a U-shaped profile with a base thereof constrained to the supporting longitudinal member 5, the wings preferably sliding transversally in such a way as to allow adjustment of the range of oscillation.

In a further embodiment, the adjusting organs 6 comprise, in addition or as an alternative, clutch organs associated to the support Y hinging the main longitudinal member 2 to the supporting longitudinal member 5.

The clutch organs make it possible, on the basis of plant specifications, to adjust the maximum force with which the member 2 tends to oscillate when the operating organs 4 engage with the rollers 31 of the storage unit 30.

The operating arm 1 of the invention operates advantageously in a station 10 for loading/unloading storage units 30 comprising a gantry frame 8 along the uprights of which one arm or two arms 1 are slidingly guided in a vertical direction, and a plane of operated rollers 7 suitable to receive/release ceramic products from/onto adjacent conveyors.

The arm(s) 1 and the plane of operated rollers 7 project from and are borne by one or two carriages, according to whether or not independent activation of the arm(s) 1 and of the plane of operated rollers 7 is required.

In a hypothetical station 10 provided with a pair of arms 1, during the operative stage the supporting longitudinal members 5 are activated vertically with stepped motion in order to position the operating organs 4 borne by the main longitudinal members 2 to face the corresponding ends of the rollers 31 of the predetermined plane of the storage unit 30.

To permit removal/depositing of the tiles from/on the predetermined plane, the pair of supporting longitudinal members 5 is activated horizontally to near to the sides 3 of the storage unit 30 in order that the operating organs 4 can engage with the respective ends of the rollers 31 of the storage unit 30 plane.

The support hinge Y of the main longitudinal members 2 to the relative supporting longitudinal members 5 is positioned near the halfway point of the sides 3 of the storage unit 30, that is, near the halfway point of the roller planes 31, making it possible to distribute the flexional stress acting upon each main longitudinal member 2 with a resultant that is either zero or in any case which is practically negligible.

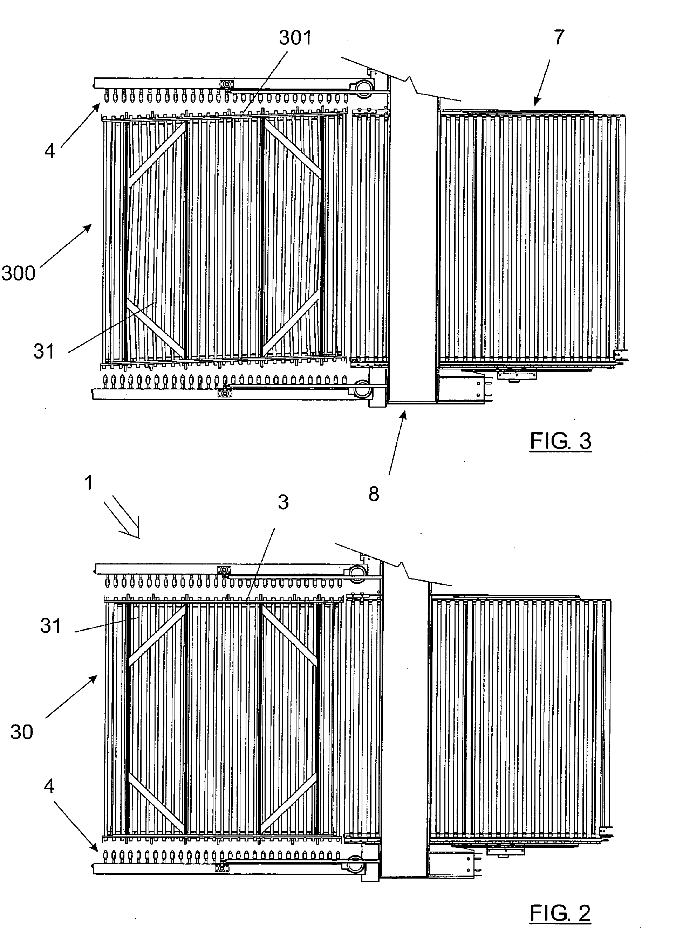

Figure 2 schematically illustrates a plan view of the station 10 for loading/unloading in operation with the type of storage unit 30 known as standard, that is, having sides 3 which are substantially perpendicular to the rollers 31 supported, and parallel to the main longitudinal members 2.

In this case, when the operating organs 4 engage with the ends of the rollers 31, the main longitudinal members 2 undergo practically no oscillation, or at most a negligible amount of oscillation, relative to the corresponding supporting longitudinal members 5.

Figure 3 schematically shows a plan view of the station 10 for loading/unloading in operation on a type of storage unit known as "non-perfect", indicated with reference number 300, that is, where the sides 301 supporting the rollers 31 are not perfectly perpendicular to the rollers 31, and thus give rise to a sort of rhombus-shaped perimeter structure.

In this case, when the operating organs 4 engage with the ends of the rollers 31, the main longitudinal members 2 tend to oscillate relative to the corresponding supporting longitudinal members 5, in order to be oriented parallel to the sides 301 of the non-perfect storage unit 300.

If the non-perfect aspect of the storage unit 300 is such that the sides 301 are incident, that is, not reciprocally parallel, the main longitudinal members 2 automatically accommodate to each side 301, even being able to oscillate differently to one another to accommodate different angles.

When the operation of removal/placing of the tiles from or onto the predetermined plane has been completed, the pair of supporting longitudinal members 5 is activated horizontally to distance from the sides 3 of the storage unit 30 in order to allow the operating organs 4 to disengage from the respective ends of rollers 31.

During the disengagement phase, possible accidental and/or undesired oscillations of the main longitudinal members 2 are prevented by the relative vertical projections 60 which strike against the corresponding wings 61, 62, giving rise to a permitted range of oscillations, adjustable if required.

Accidental and/or undesired oscillations are prevented during all phases of motion of the main longitudinal members 2 closer to/away from the sides 3 of the storage units 30, and also during every phase of vertical activation of the supporting longitudinal members 5.

From the above description it is clear that the arm provided for operating the roller planes of storage units for stocking ceramic products, particularly suited to stations for loading/unloading storage units, enables all the rollers of each plane to be correctly activated under any operating conditions.

Hinging the main longitudinal member, which supports the operating organs, to a supporting longitudinal member, activated horizontally closer to/away from the storage unit, makes it possible to obtain a load diagram of flexional stresses acting on the main longitudinal member with a resultant practically equal to zero, at most negligible making it possible to correctly activate the rollers of the type of storage units known as non-perfect storage units, that is, those having sides which are not perfectly perpendicular to the rollers.

Further, the arm which is the object of this invention allows the storage unit to engage with/disengage from the loading/unloading station whatever the configuration of the arm.

Advantageously the support hinge of the main longitudinal member can slide lengthways along the supporting longitudinal member, for example by means of a slide, in such a way as to enable unlimited adjustment of the arm which is the object of the invention.

This invention has obviously been described by way of a non-limiting example, the scope of protection of the invention being defined by the following claims.

## Claims

1. An arm (1) for operating roller planes of a storage unit (30) for stocking ceramic products, of a type comprising a main longitudinal member (2), which extends horizontally for at least as far as a full extension of sides (3) of the storage unit (30), which main longitudinal member (2) is provided with a plurality of organs (4) for rotating ends of rollers (31) of each roller plane of the storage unit (30), **characterised in that** it comprises a supporting longitudinal member (5), on which the main longitudinal member (2) is hinged, which supporting longitudinal member (5) can be in operation vertically step-driven to position the operating organs (4) to face the ends of the rollers (31) of each plane of the storage unit (30), and activated horizontally towards/away from the sides (3) of the storage unit (30) to enable the operating organs (4) to engage/disengage with or from the ends of the rollers (31) of each roller plane of the storage unit (30); the main longitudinal member (2) being able to oscillate about a hinge axis (y) thereof in order to enable a correct activation of the rollers (31) of the corresponding plane.

2. The arm (1) of claim 1, **characterised in that** the main longitudinal member (2) is hinged by a support hinge (Y) to the supporting longitudinal member (5) at a point which corresponds to about a halfway point along the sides (3) of the storage unit (30), that is at a point which corresponds to about a halfway point along the roller planes (31).

3. The arm (1) of claim 1, **characterised in that** the support hinge (Y) of the main longitudinal member (2) to the supporting longitudinal member (5) is in a longitudinally adjustable position relative to the supporting longitudinal member (5).

4. The arm (1) of one of claims from 1 to 3, **characterised in that** the supporting longitudinal member (5) is oriented parallel to a horizontal plane (k) containing the main longitudinal member (2).

5. The arm (1) of one of the claims from 1 to 4, **characterised in that** organs (6) are provided for adjusting oscillation of the main longitudinal member (2) relative to the supporting longitudinal member (5).

6. The arm (1) of claim 5, **characterised in that** the organs of adjustment (6) comprise a vertical projection (60), associated to a longitudinal member of the main longitudinal member (2) or the supporting longitudinal member (5), which during the oscillation strikes against transversal abutment means (61, 62) associated to the other longitudinal member of the main longitudinal member (2) or the supporting longitudinal member (5), giving rise to a defined range of oscillation of the main longitudinal member (2).

7. The arm (1) of claim 6, **characterised in that** the transversal abutment means (61, 62) provided are of an adjustable type, enabling adjustment of the range of oscillation.

8. The arm (1) of one of claims from 5 to 7, **characterised in that** the adjustment organs (6) comprise clutch organs associated to the support hinge (Y) of the main longitudinal member (2) to the supporting longitudinal member (5).

9. A station (10) for loading/unloading ceramic products to/from storage units (30, 300) comprising a gantry frame (8), at least one arm (1) of one of claims from 1 to 7, and a plane of operated rollers (7) for receiving/releasing ceramic products from/to adjacent conveyors, the at least one arm (1) and the plane of operated rollers (7) being slidingly guided in a vertical direction along the uprights of the gantry frame (8), the at least one arm (1) and the plane of operated rollers (7) projecting from one or two carriages.

## Patentansprüche

1. Ein Arm (1) zum Betreiben von Rollenebenen einer Lagereinheit (30) zur Lagerung von Keramikprodukten, von einem Typus, der einen Haupt-Längsträger (2) umfaßt, der sich horizontal wenigstens so weit erstreckt, wie es einer vollen Ausdehnung der Seiten (3) der Lagereinheit (30) entspricht, wobei der Haupt-Längsträger (2) mit einer Anzahl von Elementen (4) für die sich drehenden Enden der Rollen (31) der einzelnen Rollenebenen der Lagereinheit (30) versehen ist, **dadurch gekennzeichnet, daß** er einen Unterstützungs-Längsträger (5) umfaßt, an dem der Haupt-Längsträger (2) angelenkt ist, wobei der Unterstützungs-Längsträger (5) im Betrieb in vertikaler Richtung derart schrittweise bewegt werden kann, daß er die Antriebselemente (4) derart positioniert, daß sie den Enden der Rollen (31) jeder Ebene der Lagereinheit (30) gegenüber liegen, und in horizontaler Richtung zu den Seiten (3) der Lagereinheit (30) hin/von diesen weg derart, daß die Antriebselemente (4) in Eingriff mit oder außer Eingriff von den Enden der Rollen (31) jeder einzelnen Rollenebene der Lagereinheit (30) gelangen; wobei der Haupt-Längsträger (2) in der Lage ist, sich um eine Scharnierachse (y) hin- und her zu bewegen, um eine korrekte Aktivierung der Rollen (31) der entsprechenden Ebene zu ermöglichen.

2. Der Arm (1) gemäß Anspruch 1, **dadurch gekennzeichnet, daß** der Haupt-Längsträger (2) über ein Unterstützungsscharnier (Y) am Unterstützungs-Längsträger (5) an einer Stelle angelenkt ist, die in etwa der halben Strecke entlang der Seiten (3) der Lagereinheit (30) entspricht, das heißt, an einer Stelle, die in etwa der Mitte der Rollenebenen (31) entspricht.

3. Der Arm (1) gemäß Anspruch 1, **dadurch gekennzeichnet, daß** sich das Unterstützungsscharnier (Y) des Haupt-Längsträgers (2) am Unterstützungs-Längsträger (5) in einer in Längsrichtung verstellbaren Position in Bezug auf den Unterstützungs-Längsträger (5) befindet.

4. Der Arm (1) gemäß einem der Ansprüche 1 bis 3, **dadurch gekennzeichnet, daß** der Unterstützungs-Längsträger (5) parallel zu einer horizontalen Ebene (k) ausgerichtet ist, die den Haupt-Längsträger (2) enthält.

5. Der Arm (1) gemäß einem der Ansprüche 1 bis 4, **dadurch gekennzeichnet, daß** Elemente (6) für die Anpassung der Oszillation des Haupt-Längsträgers (2) relativ zum Unterstützungs-Längsträger (5) vorgesehen sind.

6. Der Arm (1) gemäß Anspruch 5, **dadurch gekennzeichnet, daß** die AnpassungsElemente (6) einen vertikalen Ansatz (60) aufweisen, der einem Längselement des Haupt-Längsträgers (2) oder des Unterstützungs-Längsträgers (5) zugeordnet ist, der während der Oszillation gegen transversale Widerlager (61, 62) stößt, die dem anderen Längselement des Haupt-Längsträgers (2) oder des Unterstützungs-Längsträgers (5) zugeordnet sind, wodurch der Schwingungsbereich des Haupt-Längsträgers (2) definiert wird.

7. Der Arm (1) gemäß Anspruch 6, **dadurch gekennzeichnet, daß** die transversalen Widerlager (61, 62) derart ausgebildet sind, daß sie verstellbaren Typs sind und dadurch eine Anpassung des Schwingungsbereiches erlauben.

8. Der Arm (1) gemäß einem der Ansprüche 5 bis 7, **dadurch gekennzeichnet, daß** die Anpassungselemente (6) Kupplungsorgane umfassen, die dem UnterstützungsScharnier (Y) des Haupt-Längsträgers (2) am Unterstützungs-Längsträger (5) zugeordnet sind.

9. Eine Station (10) zum Be-und Entladen von keramischen Erzeugnissen in / von Lagereinheiten (30, 300) mit einem Gerüstrahmen (8), wenigstens einen Arm (1) gemäß einem der Ansprüche 1 bis 7 und einer Ebene angetriebener Rollen (7) für die Aufnahme / Abgabe von keramischen Erzeugnissen von / zu benachbarten Förderbändern, wobei der wenigstens eine Arm (1) und die Ebene der angetriebenen Rollen (7) in vertikaler Richtung gleitend entlang der Stützen des Gerüstrahmens (8) geführt ist, wobei sich der wenigstens eine Arm (1) und die Ebene der angetriebenen Rollen (7) von einem oder zwei Wagen weg erstrecken.

## Revendications

1. Bras (1) pour actionner des plans de rouleaux d'une unité de stockage (30) destinée à stocker des produits en céramique, d'un type comprenant un élément principal longitudinal (2), qui s'étend horizontalement sur au moins aussi loin qu'une extension complète des côtés (3) de l'unité de stockage (30), lequel élément principal longitudinal (2) est muni d'une pluralité d'organes (4) pour faire tourner les extrémités des rouleaux (31) de chaque plan de rouleaux de l'unité de stockage (30), **caractérisé en ce qu'**il comprend un élément de support longitudinal (5), sur lequel l'élément principal longitudinal (2) est articulé, lequel élément de support longitudinal (5) peut être en service verticalement pas à pas pour positionner les organes d'actionnement (4) pour faire face aux extrémités des rouleaux (31) de chaque plan de l'unité de stockage (30), et peut être activé horizontalement vers/à distance des côtés (3) de l'unité de stockage (30) pour permettre de mettre en prise/libérer les organes d'actionnement (4) avec ou depuis les extrémités des rouleaux (31) de chaque plan de rouleaux de l'unité de stockage (30) ; l'élément principal longitudinal (2) étant à même d'osciller autour d'un axe d'articulation (y) de celui-ci afin de permettre une activation correcte des rouleaux (31) du plan correspondant.

2. Bras (1) selon la revendication 1, **caractérisé en ce que** l'élément principal longitudinal (2) est articulé par une articulation de support (Y) sur l'élément de support longitudinal (5) à un point qui correspond à environ un point médian le long des côtés (3) de l'unité de stockage (30), c'est-à-dire à un point qui correspond à environ un point médian sur les plans de rouleaux (31).

3. Bras (1) selon la revendication 1, **caractérisé en ce que** l'articulation de support (Y) de l'élément principal longitudinal (2) sur l'élément de support longitudinal (5) est dans une position ajustable longitudinalement par rapport à l'élément de support longitudinal (5).

4. Bras (1) selon l'une des revendications 1 à 3, **caractérisé en ce que** l'élément de support longitudinal (5) est orienté parallèlement à un plan horizontal (k) contenant l'élément principal longitudinal (2).

5. Bras (1) selon l'une des revendications 1 à 4, **caractérisé en ce que** des organes (6) sont prévus pour ajuster l'oscillation de l'élément principal longitudinal (2) par rapport à l'élément de support longitudinal (5).

6. Bras (1) selon la revendication 5, **caractérisé en ce que** les organes d'ajustement (6) comprennent une saillie verticale (60), associée à un élément longitudinal de l'élément principal longitudinal (2) ou de l'élément de support longitudinal (5), qui lors de l'oscillation bute contre des moyens d'aboutement transversaux (61, 62) associés à l'autre élément longitudinal de l'élément principal longitudinal (2) ou de l'élément de support longitudinal (5), donnant naissance à un domaine défini d'oscillation de l'élément principal longitudinal (2).

7. Bras (1) selon la revendication 6, **caractérisé en ce que** les moyens d'aboutement transversaux (61, 62) prévus sont d'un type ajustable, permettant l'ajustement du domaine d'oscillation.

8. Bras (1) selon l'une des revendications 5 à 7, **caractérisé en ce que** les organes d'ajustement (6) comprennent des organes d'embrayage associés à l'articulation de support (Y) de l'élément principal longitudinal (2) sur l'élément de support longitudinal (5).

9. Poste (10) pour charger/décharger des produits en céramique sur/depuis des unités de stockage (30, 300) comprenant un châssis de portique (8), au moins un bras (1) selon l'une des revendications 1 à 7, et un plan de rouleaux actionnés (7) servant à recevoir/libérer des produits en céramique de/sur des transporteurs adjacents, l'au moins un bras (1) et le plan de rouleaux actionnés (7) étant guidés à coulissement dans une direction verticale le long des montants du châssis de portique (8), l'au moins un bras (1) et le plan de rouleaux actionnés (7) faisant saillie à partir d'un ou deux chariots.
